# EUROPÄISCHE PATENTSCHRIFT

(11) **EP 0 632 260 B1**
(45) Veröffentlichungstag und Bekanntmachung des Hinweises auf die Patenterteilung: **12.03.1997**
(21) Anmeldenummer: 93110262.8
(22) Anmeldetag: 28.06.1993
(51) Int. Cl.: G01M 15/00

(54) **Verfahren zum Erkennen von Verbrennungsaussetzern bei mehreren Zylindern**
Procedure for detecting misfire in multiple cylinders
Procédé de détection des ratés d'allumage dans plusieurs cylindres

(43) Veröffentlichungstag der Anmeldung: 04.01.1995
(73) Patentinhaber: SIEMENS AKTIENGESELLSCHAFT, 80333 München (DE)
(72) Erfinder: Wier, Manfred, Dr.-Ing., D-8411 Wenzenbach (DE); Krebs, Stephan, Dr.-Ing., D-8400 Regensburg (DE); Reupke, Wolfgang, Dipl.-Ing., D-8400 Regensburg (DE); Angermaier, Anton, Dipl.-Ing., D-8390 Landshut (DE)

(56) Entgegenhaltungen:
- GB-A- 2 256 491
- PATENT ABSTRACTS OF JAPAN vol. 17, no. 322 (M-1432) 18. Juni 1993 & JP-A-05 033 717 (NIPPONDENSO CO LTD) 9. Februar 1993

## Beschreibung

Verfahren zum Erkennen von Verbrennungsaussetzern bei mehreren Zylindern

Die Erfindung betrifft ein Verfahren zur Erkennung von Verbrennungsaussetzern, insbesondere ein Verfahren, das es erlaubt, auch dann Aussetzer mit großer Zuverlässigkeit zu erkennen, wenn Verbrennungsaussetzer in mehreren Zylindern auftreten.

Zum Erkennen von Verbrennungsaussetzern werden unter anderem Verfahren verwendet, die die durch die Aussetzer verursachten Drehzahlschwankungen der Kurbelwelle auswerten. Ein solches Verfahren ist beispielsweise in der DE-A-41 00 527 beschrieben. Bei diesen Verfahren werden sogenannte Laufunruhewerte berechnet, bei denen Störgrößen, die zu Fehlerkennungen führen könnten, wie zum Beispiel eine Beschleunigung oder Verzögerung des Fahrzeuges, bereits mehr oder weniger gut kompensiert sind. Diese Laufunruhewerte werden dann mit Schwellwerten verglichen und bei Überschreiten dieser Schwellwerte wird auf einen Verbrennungsaussetzer erkannt. Trotz zum Teil recht kompliziert berechneter Laufunruhewerte, die die Störeinflüsse möglichst gut ausschalten sollen, kommt es immer wieder zu Fehlerkennungen, das heißt es werden Verbrennungsaussetzer angezeigt, obwohl tatsächlich gar keine aufgetreten sind oder es werden keine Verbrennungsaussetzer angezeigt, obwohl tatsächlich welche aufgetreten sind. Die Gefahr von Nichterkennungen ist besonders dann groß, wenn in mehreren Zylindern Verbrennungsaussetzer auftreten, genauer gesagt: wenn bei einem Viertaktverbrennungsmotor während zwei Umdrehungen der Kurbelwelle in mehreren Zylindern Verbrennungsaussetzer auftreten. Dies sei im folgenden mit dem Begriff "Mehrzylinderaussetzer" bezeichnet. Bei Mehrzylinderaussetzern sind die Laufunruhewerte kleiner als bei Einzelzylinderaussetzern. Um solche Mehrzylinderaussetzer noch zu erkennen, müssen daher die Schwellwerte erniedrigt werden. Ein solches Verfahren ist in der DE-A 41 18 580 beschrieben. Bei dem dort beschriebenen Verfahren werden:
- Laufunruhewerte für Einzelzylinderaussetzer in beliebiger Weise bestimmt;
- ein jeweils aktueller, für Einzelzylinderaussetzer geltender Laufunruheschwellwert abhängig vom aktuellen Betriebszustand der Brennkraftmaschine bestimmt;
- der Laufunruheschwellwert erniedrigt, wenn Mehrzylinderaussetzer erkannt sind;
- und auf Aussetzer in dem jeweiligen Zylinder geschlossen, wenn der Laufunruhewert für diesen Zylinder den erniedrigten Laufunruheschwellwert übersteigt.

Mehrzylinderaussetzer werden dabei erkannt, indem
- Laufunruhewerte für Einzelzylinder in beliebiger Weise bestimmt werden;
- eine vorgegebene Anzahl von Summentermen mit jeweils gleichem Vorzeichen, die Laufunruhewerte oder Differenzen solcher Werte sind, aufsummiert werden;
- und auf einen Mehrzylinderaussetzer geschlossen wird, wenn mindestens eine Summe einen vorgegebenen Summenschwellwert überschreitet.

Aufgabe der vorliegenden Erfindung ist es, ein Verfahren anzugeben, das es mit noch größerer Zuverlässigkeit und unter geringer Belastung des auswertenden Rechners gestattet, Einzel- und Mehrzylinderverbrennungsaussetzer zu erkennen.

Gelöst wird diese Aufgabe dadurch, daß die für jeden Zylinder nach einem beliebigen Verfahren berechneten Laufunruhewerte jeweils getrennt mit einem normal großen Schwellwert, wie er zur Einzelzylinderverbrennungsaussetzererkennung verwendet wird und einem gegenüber diesem Schwellwert verminderten Schwellwert, wie er zur Mehrzylinderverbrennungsaussetzererkennung verwendet wird, verglichen wird. Bei Überschreitung der jeweiligen Schwellwerte werden zugehörige Summenzähler erhöht. Dies geschieht über einen längeren Beobachtungszeitraum, beispielsweise über 2000 Verbrennungen.
Am Ende des Beobachtungszeitraums wird, sofern die Gesamtsummen einen vorgebbaren Grenzwert überschreiten, durch Vergleich der einzelnen Summen festgestellt, ob ein Mehrzylinderaussetzer oder ein Einzelzylinderaussetzer vorliegt und welcher oder welche Zylinder von dem oder den Aussetzern betroffen sind.

Dazu werden die Zylinder zu Gruppen erhöhter Aussetzerwahrscheinlichkeit zusammengefaßt, das heißt zu Gruppen, die funktional zusammengehören, beispielsweise bei einer Bankeinspritzung, die Zylinder, die von einer gemeinsamen Einspritzvorrichtung mit Kraftstoff versorgt werden, oder bei einer Doppelfunkenzündspule die Zylinder, die von dieser Zündspule mit Zündenergie versorgt werden. Bei einem Mehrzylinderaussetzer, d.h. wenn alle Zylinder dieser Gruppe einen Verbrennungsaussetzer aufweisen, ist die Gesamtsumme der dieser Gruppe zugehörigen Verbrennungsaussetzerzähler wesentlich größer als die Gesamtsumme der Verbrennungsaussetzerzähler bei einer anderen Zylindergruppe.
Ein solcher Gruppenunterschied könnte aber auch durch einen Einzelaussetzer in dieser Gruppe verursacht worden sein. Um dies zu überprüfen, werden nun die Aussetzerzahlen der Zylinder einer Gruppe untereinander verglichen. Ist die Aussetzerzahl innerhalb einer Gruppe annähernd gleich, wird auf einen Gruppenaussetzer geschlossen. Weichen die Aussetzerzahlen aber stark voneinander ab, so wird ein Einzelaussetzer vermutet. Da die Aussetzerermittlung aber mit verminderten Schwellwerten durchgeführt wurde, werden um Fehlerkennungen zu vermeiden noch die Aussetzersummen betrachtet, bei der die Laufunruhewerte dieser Zylinder mit dem nicht verminderten Schwellwert verglichen wurden. Unter den Aussetzersummen aller Zylinder wird die größte ermittelt und ein Einzelzylinderarnssetzer bei dem zugehörigen Zylinder registriert. Zusätzlich zu dieser Maximalwertermittlung können auch noch die übrigen Aussetzersummen mit einem vorgebbaren Summengrenzwert verglichen werden und bei den Zylindern, deren Summen diesen Grenzwert überschreiten, auch ein Einzelzylinderverbrennungsaussetzer angezeigt werden. Das erfindungsgemäße Verfahren wird im folgenden anhand der Zeichnungsfiguren noch näher erläutert.

Die Zeichnungsfiguren zeigen schematisch den Verfahrensablauf des erfindungsgemäßen Verfahrens am Beispiel eines Vierzylindermotors, bei dem zwei Zylindergruppen gebildet werden: Gruppe 1 mit den Zylindern 1 und 3 sowie Gruppe 2 mit den Zylindern 2 und 4. Es wird weiter angenommen, daß die Laufunruhewerte beim Auftreten von Verbrennungsaussetzern einen positiven Wert annehmen und entsprechend dann positive Grenzwerte überschreiten. Wird ein Verfahren gewählt, das beim Auftreten von Verbrennungsaussetzern negative Laufunruhewerte liefert, so müssen auch die Grenzwerte negativ gewählt werden und es muß eine Kontrolle auf Unterschreiten dieser Grenzwerte durchgeführt werden.

Die Zeichnungsfiguren 1a und 1b zeigen eine erste Ausführungsform des Verfahrens, die Zeichnungsfiguren 2a und 2b zeigen eine weitere Ausführungsform des erfindungsgemäßen Verfahrens, die zu einer noch geringeren Belastung des auswertenden Rechners führt.

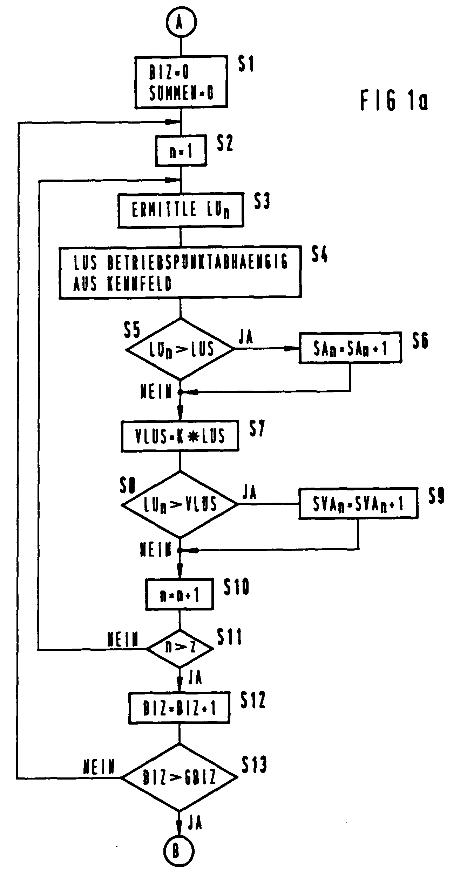

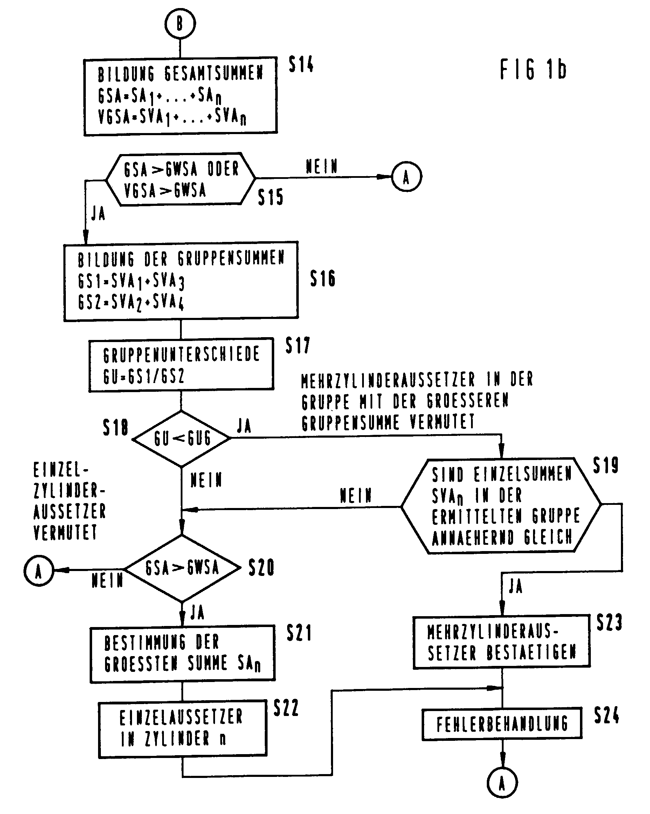

In Zeichnungsfigur la werden zu Verfahrensbeginn (A) im Verfahrensschritt S1 alle Summenzähler auf Null gesetzt, insbesondere auch der Zähler BIZ, der die Verbrennungszyklen während des Beobachtungszeitraums zählt. Die folgenden Verfahrensschritte werden nacheinander für alle Zylinder durchgeführt. Dazu wird zunächst im Verfahrensschritt S2 ein Zylinderzähler n auf den Wert 1 gesetzt. Im Verfahrensschritt S3 wird dann nach einem beliebigen Verfahren, wie schon oben in der Beschreibungseinleitung angegeben, ein Laufunruhewert LUₙ ermittelt. Im Verfahrensschritt S4 wird ein Laufunruheschwellwert LUS in Abhängigkeit vom aktuellen Betriebspunkt der Brennkraftmaschine, beispielsweise abhängig von Last und Drehzahl, einem Kennfeld entnommen. Der oben ermittelte Laufunruhewert LUₙ wird im Verfahrensschritt S5 mit diesem Laufunruheschwellwert LUS verglichen. Ist der Laufunruhewert LUₙ größer als der Laufunruheschwellwert LUS, so wird der diesem Zylinder zugehörige Summenzähler SAₙ im Verfahrensschritt S6 um eins erhöht. Ist der Laufunruhewert LUₙ aber kleiner oder gleich dem Schwellwert LUS, wird ohne Zählererhöhung weitergegangen zu Verfahrensschritt S7, bei dem ein verminderter Schwellwert VLUS ermittelt wird, entweder aus einem weiteren Kennfeld oder aus dem ursprünglichen aus dem Kennfeld ausgelesenen Laufunruhewert LUS durch Multiplikation mit einem Faktor k, der zwischen Null und Eins liegt. Der Faktor k wird durch Versuche auf dem Prüfstand für die jeweilige Brennkraftmaschine im vorhinein ermittelt. Der verminderte Laufunruheschwellwert VLUS ist notwendig, damit auch bei Mehrzylinderaussetzern, bei denen die Laufunruhewerte kleiner sind als bei Einzelzylinderaussetzern, Verbrennungsaussetzer erkannt werden können. Im Verfahrensschritt S8 wird der Laufunruhewert LUₙ mit dem verminderten Laufunruheschwellwert VLUS verglichen. Der für den einzelnen Zylinder berechnete Laufunruhewert LUₙ wird also sowohl mit dem unverminderten Laufunruheschwellwert LUS als auch dem verminderten Laufunruheschwellwert VLUS verglichen, da im jetzigen Verfahrensstadium noch nicht festgestellt werden kann, ob ein Einzelzylinderverbrennungsaussetzer oder ein Mehrzylinderverbrennungsaussetzer vorliegt. Ist der Laufunruhewert LUₙ größer als der verminderte Laufunruheschwellwert(VLUS) wird der zugehörige Summenzähler SVAₙ um eins erhöht (Verfahrensschritt S9). Ist der Laufunruhewert aber kleiner oder gleich dem Schwellwert, so wird ohne Summenzählererhöhung gleich weitergegangen zum Verfahrensschritt S10 und dort der Zylinderzähler n um eins erhöht. Diese Berechnung der Laufunruhewerte und der Vergleich mit den Schwellwerten wird für alle Zylinder durchgeführt. Ist dies erfolgt, so wird im Verfahrensschritt S11 zum Verfahrensschritt S12 weitergegangen und der Verbrennungszykluszähler BIZ um eins erhöht. Ist der Beobachtungszeitraum abgelaufen, so wird im Verfahrensschritt S13 verzweigt zur Markierung B in Figur 1b, wo die Auswertung der während des Beobachtungszeitraums ermittelten Summen stattfindet. Im Verfahrensschritt S14 wird zunächst aus allen Einzelsummen SAₙ, die beim Vergleich der Laufunruhewerte LUₙ mit dem unverminderten Laufunruheschwellwert LUS erhalten wurden, eine Gesamtsumme GSA gebildet. Auch aus allen Einzelsummen SVAₙ, die beim Vergleich der Laufunruhewerte LUₙ mit dem verminderten Laufunruheschwellwert VLUS erhalten wurden, wird eine Gesamtsumme VGSA gebildet. Eine Auswertung erfolgt nur, wenn mindestens eine dieser Summen GSA, VGSA größer als ein vorgebbarer Grenzwert GWSA ist (Verfahrensschritt S15). Ist dies nicht der Fall, so wird zum Verfahrensanfang A in Fig la zurückgegangen.
Ist dies aber der Fall, so werden im Verfahrensschritt S16 zunächst jeweils für die Zylinder einer Zylindergruppe, die Gruppensummen aus den den Zylindern zugehörigen Einzelsummen gebildet, die durch den Vergleich der Laufunruhewerte mit den verminderten Laufunruheschwellwerten ermittelt wurden. Im Ausführungsbeispiel wird also für die Gruppe 1, der die Zylinder 1 und 3 zugehören, die Gruppensumme GS1 durch Addition der Einzelsummen SVA₁ und SVA₃ gebildet. Für die Gruppe 2, der die Zylinder 2 und 4 zugehören, wird die Gruppensumme GS2 durch Addition der Einzelsummen SVA₂ und SVA₄ gebildet. Wenn die Gruppensummen der Gruppen sehr unterschiedlich sind, wird ein Mehrzylinderaussetzer vermutet, in der Gruppe, die die höhere Aussetzerzahl aufweist. Dazu wird im Verfahrensschritt S17 der Gruppenunterschied GU festgestellt, indem die kleinere Gruppensumme (hier im Beispiel ist GS1 angenommen) durch die größere Gruppensumme (hier im Beispiel GS2) dividiert wird und dann im Verfahrensschritt S18 dieser Gruppenunterschied GU mit einem Gruppenunterschiedsgrenzwert GUG verglichen wird. Ist der Wert kleiner als der Grenzwert, d.h. sind die Gruppenunterschiede groß, so wird ein Mehrzylinderaussetzer in der Gruppe mit der größeren Gruppensumme vermutet. Ein solcher Gruppenunterschied könnte aber auch durch einen Einzelzylinderaussetzer verursacht worden sein. Es wird daher im Verfahrensschritt S19 untersucht, ob die Einzelsummen SVAₙ in der Zylindergruppe, in der ein Mehrzylinderaussetzer vermutet wird, annähernd gleich groß sind, beispiels indem wiederum die kleinere Einzelsumme durch die größere Einzelsumme dividiert wird und das Ergebnis mit einem weiteren Grenzwert verglichen wird. Sind die Summen annähernd gleich, so wird der Mehrzylinderaussetzer dieser Gruppe bestätigt (Verfahrensschritt S23), einem Fehlerbehandlungsblock gemeldet (Verfahrensschritt S24) und zum Verfahrensanfang A in Figur 1a zurückgegangen. Sind die Einzelsummen beim Vergleich in Verfahrensschritt S19 aber unterschiedlich groß, so wird ein Einzelzylinderaussetzer vermutet beim Zylinder dessen Einzelsumme auffallend groß ist. Um eine Fehlerkennung zu vermeiden, da diese Summenbildung durch Vergleich mit dem verminderten Laufunruheschwellwert erfolgte, der eigentlich nicht zur Erkennung von Einzelzylinderaussetzern vorgesehen ist, werden zusätzlich die Summen SAₙ herangezogen, die durch den Vergleich der Laufunruhewerte der Zylinder mit dem nicht verminderten Laufunruheschwellwert LUS gebildet wurden. Es wird zum Verfahrensschritt S20 verzweigt. Zu diesem Verfahrensschritt gelangt man auch, wenn im Verfahrensschritt S18 der Gruppenunterschiedswert größer oder gleich dem Gruppenunterschiedsgrenzwert GUG ist. Mit anderen Worten: sind die Gruppensummenwerte nahezu gleich, so wird ein Einzelzylinderaussetzer vermutet. Eine Bestimmung des Einzelaussetzers findet nur statt, wenn die Gesamtsumme GSA größer als der Gesamtsummengrenzwert (GWSA) ist (Verfahrensschritt 20). Zur Überprüfung und Identifizierung des aussetzenden Zylinders wird nun aus den Aussetzersummenwerten SAₙ, die man durch Vergleich der Laufunruhewerte mit dem nicht verminderten Laufunruheschwellwert LUS erhalten hat, der maximale Summenwert ermittelt (Verfahrensschritt S21). Es wird dann in Verfahrensschritt S22 ein Einzelaussetzer des Zylinders festgestellt, dem dieser Summenwert zugehört. Das Ergebnis wird einem Fehlerbehandlungsblock gemeldet (Verfahrensschritt S22) und wieder zum Verfahrensanfang A in Figur 1a zurückgegangen.

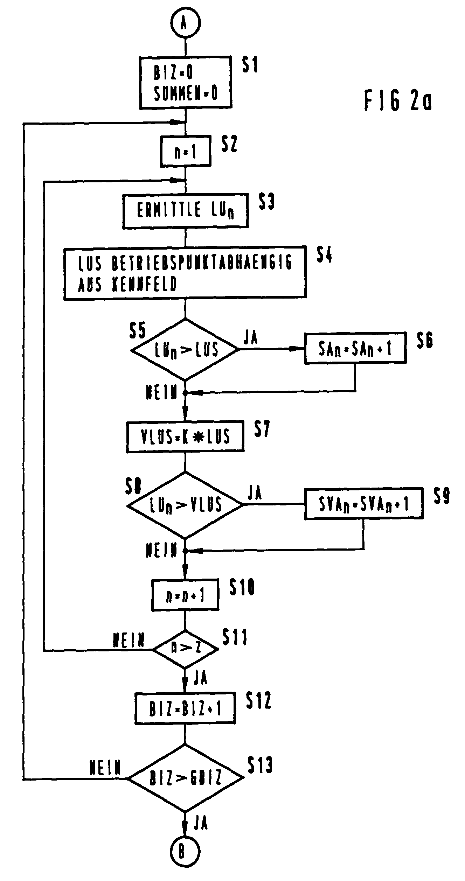

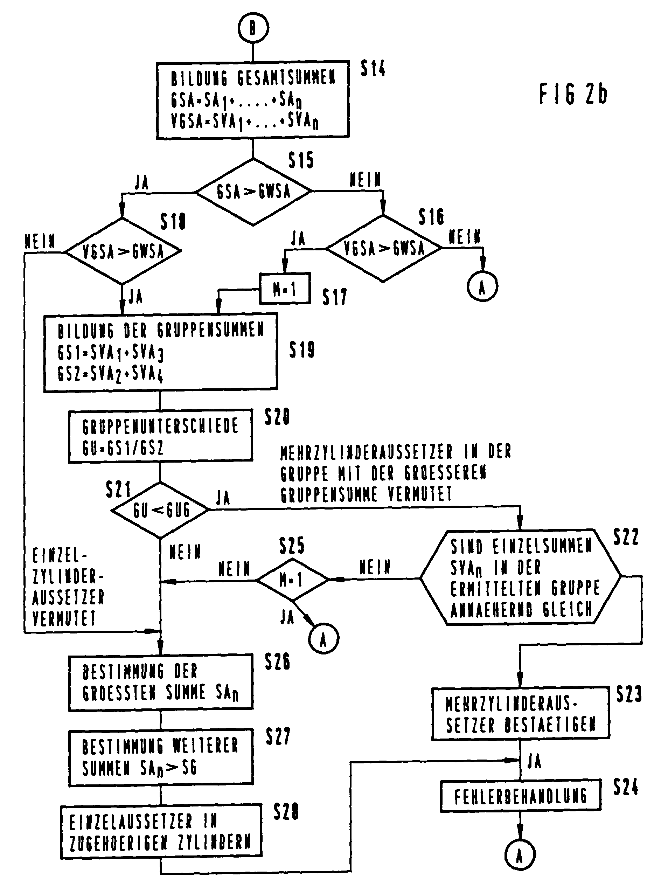

In den Zeichnungsfiguren 2a und 2b ist eine weitere Ausführungsform des erfindungsgemäßen Verfahrens dargestellt. Das Berechnen der Laufunruhewerte, der Vergleich mit den Grenzwerten und die Erhöhung der entsprechenden Summenzähler entspricht den Verfahrensschritten des eben beschriebenen Verfahrens, wie sie in Figur 1a dargestellt sind. Bei der Auswertung der Summen, wie sie in Figur 2b dargestellt ist, wird zunächst im Verfahrensschritt S14 ebenfalls aus allen Einzelsummen SAₙ, die beim Vergleich der Laufunruhewerte LUₙ mit dem unverminderten Laufunruheschwellwert LUS erhalten wurden, eine Gesamtsumme GSA gebildet. Auch aus allen Einzelsummen SVAₙ, die beim Vergleich der Laufunruhewerte LUₙ mit dem verminderten Laufunruheschwellwert VLUS erhalten wurden, wird eine Gesamtsumme VGSA gebildet.
Im Verfahrensschritt S15 wird dann die erste Gesamtsumme GSA mit einem Gesamtsummengrenzwert GWSA verglichen. Ist die erste Gesamtsumme GSA kleiner oder gleich dem Gesamtsummengrenzwert GWSA, wird zum Verfahrensschritt S16 verzweigt. Dort wird dann die zweite Gesamtsumme VGSA mit dem Gesamtsummengrenzwert verglichen. Ist die Gesamtsumme VGSA kleiner oder gleich dem Gesamtsummengrenzwert GWSA, so wird davon ausgegangen, daß tatsächlich kein Verbrennungsaussetzer stattgefunden hat und es wird zum Verfahrensanfang A in Figur 2a zurückgegangen. Ist die Gesamtsumme VGSA aber größer als der Gesamtsummengrenzwert GWSA wird in Verfahrensschritt S17 ein Merker M gesetzt und dann weiter zum Verfahrensschritt S19 gegangen.
Ist im Verfahrensschritt S15 die erste Gesamtsumme GSA größer als der Gesamtsummengrenzwert GWSA , so wird zum Verfahrensschritt S18 verzweigt. Dort wird wiederum die zweite Gesamtsumme VGSA mit dem Gesamtsummengrenzwert GWSA verglichen. Ist die Gesamtsumme VGSA kleiner oder gleich dem Gesamtsummengrenzwert GWSA, so bedeutet dies, daß nur ein Einzelaussetzer vorliegen kann. Es wird direkt zum Verfahrensschritt S26 verzweigt, um den aussetzenden Zylinder zu bestimmen.
Ist im Verfahrensschritt S18 aber die Gesamtsumme VGSA größer als der Gesamtsummengrenzwert GWSA, so wird zum Verfahrensschritt S19 gegangen.
Im Verfahrensschritt S19 werden zunächst jeweils für die Zylinder einer Zylindergruppe, die Gruppensummen aus den den Zylindern zugehörigen Einzelsummen gebildet, die durch den Vergleich der Laufunruhewerte mit den verminderten Laufunruheschwellwerten ermittelt wurden. Im Ausführungsbeispiel wird also für die Gruppe 1, der die Zylinder 1 und 3 zugehören, die Gruppensumme GS1 durch Addition der Einzelsummen SVA₁ und SVA₃ gebildet. Für die Gruppe 2, der die Zylinder 2 und 4 zugehören, wird die Gruppensumme GS2 durch Addition der Einzelsummen SVA₂ und SVA₄ gebildet.
Wenn die Gruppensummen der Gruppen sehr unterschiedlich sind, wird ein Mehrzylinderaussetzer vermutet, in der Gruppe, die die höhere Aussetzerzahl aufweist. Dazu wird im Verfahrensschritt S20 der Gruppenunterschied GU festgestellt, indem die kleinere Gruppensumme (hier im Beispiel ist GS1 angenommen) durch die größere Gruppensumme (hier im Beispiel GS2) dividiert wird und dann im Verfahrensschritt S21 dieser Gruppenunterschied GU mit einem Gruppenunterschiedsgrenzwert GUG verglichen wird. Ist der Wert kleiner als der Grenzwert, d.h. sind die Gruppenunterschiede groß, so wird ein Mehrzylinderaussetzer in der Gruppe mit der größeren Gruppensumme vermutet. Ein solcher Gruppenunterschied könnte aber auch durch einen Einzelzylinderaussetzer verursacht worden sein. Es wird daher im Verfahrensschritt S22 untersucht, ob die Einzelsummen SVAₙ in der Zylindergruppe, in der ein Mehrzylinderaussetzer vermutet wird, annähernd gleich groß sind, beispielsweise indem wiederum die kleinere Gruppensumme durch die größere Gruppensumme dividiert wird und das Ergebnis mit einem weiteren Grenzwert verglichen wird. Sind die Summen annähernd gleich, so wird der Mehrzylinderaussetzer dieser Gruppe bestätigt (Verfahrensschritt S23), einem Fehlerbehandlungsblock gemeldet (Verfahrensschritt S24) und zum Verfahrensanfang A in Figur 2a zurückgegangen. Sind die Einzelsummen beim Vergleich in Verfahrensschritt S22 aber unterschiedlich groß, so wird ein Einzelzylinderaussetzer vermutet beim Zylinder dessen Einzelsumme auffallend groß ist. Um eine Fehlerkennung zu vermeiden, da diese Summenbildung durch Vergleich mit dem verminderten Laufunruheschwellwert erfolgte, der eigentlich nicht zur Erkennung von Einzelzylinderaussetzern vorgesehen ist, werden zusätzlich die Summen SAₙ herangezogen, die durch den Vergleich der Laufunruhewerte der Zylinder mit den nicht verminderten Laufunruheschwellwerten LUS gebildet wurden. Es wird zum Verfahrensschritt S26 verzweigt. Zuvor wird aber im Verfahrensschritt S25 noch gepüft, ob der Merker M gesetzt ist. Ist dieser Merker gesetzt, so bedeutet dies, daß die erste Gesamtsumme GSA nicht über dem Grenzwert GWSA lag, das heißt kein Einzelzylinderaussetzer möglich ist. Da im Verfahrensschritt S22 ermittelt wurde, daß auch kein Mehrzylinderaussetzer vorliegt, liegt gar kein Verbrennungsaussetzer vor und man geht zurück zum Verfahrensanfang A in Figur 2a. Ist der Merker M nicht gesetzt, geht es weiter zum Verfahrensschritt S26. Zu diesem Verfahrensschritt gelangt man auch, wenn im Verfahrensschritt S21 der Gruppenunterschiedswert größer oder gleich dem Gruppenunterschiedsgrenzwert GUG ist. Mit anderen Worten: sind die Gruppensummenwerte nahezu gleich, so wird ein Einzelzylinderaussetzer vermutet. Zur Überprüfung und Identifizierung des oder der aussetzenden Zylinder wird nun aus den Aussetzersummenwerten SAₙ, die man durch Vergleich der Laufunruhewerte mit dem nicht verminderten Laufunruheschwellwert LUS erhalten hat, der maximale Summenwert ermittelt. Im Verfahrensschritt S27 werden weitere Summenwerte ermittelt, die über einem vorgebbaren Grenzwert SG liegen. Im Verfahrensschritt S28 wird für den oder die diesen Summen zugehörigen Zylinder ein Einzelzylinderverbrennungsaussetzer festgestellt. Das Ergebnis wird einem Fehlerbehandlungsblock gemeldet (Verfahrensschritt S24) und wieder zum Verfahrensanfang A in Figur 2a zurückgegangen.

## Patentansprüche

1. Verfahren zum Erkennen von Verbrennungsaussetzern, bei dem aus den Drehzahlschwankungen der Kurbelwelle Laufunruhewerte berechnet und diese mit Schwellwerten verglichen werden und bei dem Zylindergruppen erhöhter Aussetzerwahrscheinlichkeit gebildet werden
**dadurch gekennzeichnet,**
- daß während eines Beobachtungszeitraums
- der für jeden Zylinder (n) berechneten Laufunruhewert (LUₙ) jeweils getrennt mit einem ersten Schwellwert (LUS) und einem gegenüber diesem verminderten zweiten Schwellwert (VLUS) verglichen wird,
- daß bei Überschreitung dieses ersten Schwellwertes (LUS) eine dem Zylinder zugeordnete erste Zählsumme (SAₙ) und beim Überschreiten dieses zweiten Schwellwertes (VLUS) eine zweite Zählsumme (SVAₙ) gebildet wird,
- und daß nach Ablauf des Beobachtungszeitraums, sofern die Gesamtsummen (GSA, VGSA) aus allen ersten oder zweiten Zählsummen einen vorgebbaren Gesamtsummengrenzwert (GWSA) überschreiten
- für jede Zylindergruppe aus den zweiten Zählsummen (SVAₙ) Gruppensummen (GS1, GS2) gebildet werden und
- auf einen Mehrzylinderverbrennungsaussetzer in der Gruppe mit der höheren Gruppensumme geschlossen wird, wenn die zweiten Zählsummen (SVAₙ) der einzelnen Zylinder in einer Gruppe annähernd gleich groß sind, dagegen
- bei unterschiedlichen zweiten Zählsummen (SVAₙ) der einzelnen Zylinder auf einen Einzelzylinderverbrennungsaussetzer bei dem Zylinder geschlossen wird, der die größte erste Zählsumme (SAₙ) aufweist, sofern die Gesamtsumme (GSA) aus den ersten Zählsummen (SAₙ) einen vorgebbaren Gesamtsummengrenzwert (GWSA) überschreitet.

2. Verfahren nach Anspruch 1
**dadurch gekennzeichnet,**
daß bei unterschiedlichen zweiten Zählsummen (SVAₙ) der einzelnen Zylinder auf einen Einzelzylinderverbrennungsaussetzer auch bei den Zylindern geschlossen wird, deren erste Zählsummen(SAₙ), einen vorgebbaren Summengrenzwert (SG) überschreiten.

3. Verfahren nach Anspruch 1
**dadurch gekennzeichnet,**
daß wenn nur die Gesamtsumme (GSA) der ersten Zählsummen (SAₙ), den Gesamtsummengrenzwert (GWSA) überschreitet, keine Untersuchung auf Mehrzylinderverbrennungsaussetzer mehr durchgeführt wird, sondern nur noch der aussetzende Einzelzylinder bestimmt wird.

4. Verfahren nach Anspruch 1
**dadurch gekennzeichnet,**
daß wenn nur die Gesamtsumme (VGSA) der zweiten Zählsummen (SVAₙ) den Gesamtsummengrenzwert (GWSA) überschreitet, keine Untersuchung auf Einzelzylinderverbrennungsaussetzer mehr durchgeführt wird, sondern nur noch auf Mehrzylinderverbrennungsaussetzer.

5. Verfahren nach Anspruch 1
**dadurch gekennzeichnet,**
daß der unverminderte und der verminderte Laufunruheschwellwert (LUS, VLUS) abhängig von aktuellen Betriebsgrößen der Brennkraftmaschine wie beispielsweise Last und Drehzahl einem Kennfeld entnommen werden.

6. Verfahren nach Anspruch 1
**dadurch gekennzeichnet,**
daß der verminderte Laufunruheschwellwert (VLUS) aus dem unverminderten Laufunruheschwellwert (LUS) durch Multiplikation mit einem Faktor (k) zwischen 0 und 1 errechnet wird.

7. Verfahren nach Anspruch 1
**dadurch gekennzeichnet,**
daß bei einer Brennkraftmaschine mit Bankeinspritzung die einer Einspritzvorrichtung zugehörigen Zylinder jeweils eine Zylindergruppe bilden.

8. Verfahren nach Anspruch 1
**dadurch gekennzeichnet,**
daß bei einer Doppelfunkenzündspule, die Zylinder, die von dieser Zündspule mit Zündenergie versorgt werden, jeweils eine Zylindergruppe bilden.

## Claims

1. Method for detecting combustion misfires in which engine roughness values are calculated from fluctuations in the speed of the crank shaft and these values are compared with threshold values, and in which cylinder groups having an increased likelihood of misfiring are formed, characterized
- in that, during a period of observation
- the engine roughness value (LUₙ) calculated for each cylinder (n) is in each case compared separately with a first threshold value (LUS) and with a second threshold value (VLUS) reduced in comparison with the first threshold value,
- in that a first counting sum (SAₙ) associated with the cylinder is formed if this first threshold value (LUS) is exceeded, and a second counting sum (SVAₙ) is formed if this second threshold value (VLUS) is exceeded,
- and in that, after the period of observation has elapsed, if the total sums (GSA, VGSA) of all of the first or second counting sums exceed a predeterminable total sum limit value (GWSA)
- group sums (GS1, GS2) are formed for each cylinder group from the second counting sums (SVAₙ) and
- a multi-cylinder combustion misfire in the group with the higher group sum is inferred if the second counting sums (SVAₙ) of the individual cylinders in a group are approximately of the same size, whereas
- if the second counting sums (SVAₙ) of the individual cylinders are different, a single-cylinder combustion misfire is inferred in the cylinder which has the highest first counting sum (SAₙ) if the total sum (GSA) of the first counting sums (SAₙ) exceeds a predeterminable total sum limit value (GWSA).

2. Method according to Claim 1, characterized in that a single-cylinder combustion misfire is also inferred in the case of the cylinders having first counting sums (SAₙ) exceeding a predeterminable sum limit value (SG) if the second counting sums (SVAₙ) of the individual cylinders are different.

3. Method according to Claim 1, characterized in that checking for multi-cylinder combustion misfires is no longer carried out and instead only the single cylinder which is misfiring is determined if only the total sum (GSA) of the first counting sums (SAₙ) exceeds the total sum limit value (GWSA).

4. Method according to Claim 1, characterized in that checking for single-cylinder combustion misfires is no longer carried out and instead checking is only carried out for multi-cylinder combustion misfires if only the total sum (VGSA) of the second counting sums (SVAₙ) exceeds the total sum limit value (GWSA).

5. Method according to Claim 1, characterized in that the unreduced and the reduced engine roughness threshold values (LUS, VLUS) are taken from a performance graph as a function of current operating variables of the internal combustion engine such as, for example, load and speed.

6. Method according to Claim 1, characterized in that the reduced engine roughness threshold value (VLUS) is calculated from the unreduced engine roughness threshold value (LUS) by multiplication by a factor (k) between 0 and 1.

7. Method according to Claim 1, characterized in that, in the case of an internal combustion engine with bank injection, the cylinders associated with one injection device in each case form one cylinder group.

8. Method according to Claim 1, characterized in that, in the case of a double spark ignition coil, the cylinders which are supplied with ignition energy by this ignition coil in each case form one cylinder group.

## Revendications

1. Procédé de détection de ratés de combustion, dans lequel des valeurs d'irrégularité de marche sont calculées à partir des variations de vitesse de rotation du vilebrequin et celles-ci sont comparées à des valeurs de seuil et dans lequel sont formés des groupes de cylindres de probabilité de ratés augmentée.
caractérisé en ce que ,
- pendant un intervalle de temps d'observation,
- la valeur d'irrégularité de marche (LUₙ) calculée pour chaque cylindre (n) est comparée respectivement de manière séparée à une première valeur de seuil (LUS) et à une seconde valeur de seuil (VLUS) diminuée par rapport à celle-ci,
- en ce que, lors du dépassement de cette première valeur de seuil (LUS), on forme une première somme de comptage (SAₙ) affectée au cylindre et, lors du dépassement de cette deuxième valeur de seuil (VLUS), on forme une deuxième somme de comptage (SVAₙ),
- et en ce que, après écoulement de l'intervalle de temps d'observation, si les sommes totales (GSA, VGSA) de toutes les premières ou secondes sommes de comptage dépassent une valeur limite totale (GWSA) prédéterminable
- pour chaque groupe de cylindres on forme, à partir des deuxièmes sommes de comptage (SVAₙ), des sommes de groupes (GS1, GS2) et
- on décide qu'il y a un raté de combustion dans plusieurs cylindres dans le groupe qui a la somme de groupe la plus grande, si les deuxièmes sommes de comptage (SVAₙ) des cylindres isolés dans un groupe sont approximativement de même grandeur; en revanche,
- si les deuxièmes sommes de comptage (SVAₙ) des cylindres isolés sont différentes, on conclut à un raté de combustion dans un cylindre isolé dans le cylindre qui présente la première somme de comptage (SAₙ) la plus grande, si la somme totale (GSA) provenant des premières sommes de comptage (SAₙ) dépasse une valeur limite de somme totale (GWSA) prédéterminable.

2. Procédé selon la revendication 1,
caractérisé en ce que,
si les deuxièmes sommes de comptage (SVAₙ) des cylindres isolés sont différentes, on conclut à un raté de combustion dans un cylindre isolé également dans les cylindres dont les premières sommes de comptage (SAₙ) dépassent une valeur limite de somme (SG) prédéterminable.

3. Procédé selon la revendication 1,
caractérisé en ce que,
si seule la somme totale (GSA) des premières sommes de comptage (SAₙ) dépasse la valeur limite de somme totale (GWSA), on n'effectue plus aucune recherche de raté de combustion dans plusieurs cylindres, mais on ne détermine plus que le cylindre isolé qui présente des ratés.

4. Procédé selon la revendication 1,
caractérisé en ce que,
si la somme totale (VGSA) des secondes sommes de comptage (SVAₙ) dépasse la valeur limite de somme totale (GWSA), on n'effectue plus aucune recherche de raté de combustion dans un cylindre isolé, mais on ne recherche plus que des ratés de combustion dans plusieurs cylindres.

5. Procédé selon la revendication 1,
caractérisé en ce que
les valeurs de seuil d'irrégularité de marche non augmentée et augmentée (LUS, VLUS) sont extraites d'un diagramme caractéristique en fonction des grandeurs de fonctionnement actuelles du moteur à combustion interne comme, par exemple, la charge et la vitesse de rotation.

6. Procédé selon la revendication 1,
caractérisé en ce que
la valeur de seuil d'irrégularité de marche diminuée (VLUS) est calculée à partir de la valeur de seuil d'irrégularité de marche non diminuée (LUS) par multiplication par un facteur (k) compris entre 0 et 1.

7. Procédé selon la revendication 1,
caractérisé en ce que,
dans un moteur à combustion interne à injection par bancs, les cylindres associés à un dispositif d'injection forment respectivement un groupe de cylindres.

8. Procédé selon la revendication 1,
caractérisé en ce que,
dans une bobine d'allumage à double étincelle, les cylindres alimentés en énergie d'allumage par cette bobine d'allumage forment respectivement un groupe de cylindres.
